# EUROPÄISCHE PATENTSCHRIFT

(11) **EP 4 568 859 B1**
(45) Veröffentlichungstag und Bekanntmachung des Hinweises auf die Patenterteilung: **23.09.2026**
(21) Anmeldenummer: 23742234.0
(22) Anmeldetag: 12.07.2023
(51) Int. Cl.: B60T 13/26, B60T 17/18, F16K 27/00, F16K 24/00, F16K 29/00

(54) **ENTLÜFTUNGSVORRICHTUNG UND BREMSSYSTEM**
BREATHER DEVICE AND BRAKE SYSTEM
DISPOSITIF DE VENTILATION ET SYSTÈME DE FREINAGE

(30) Priorität: 12.08.2022 DE 102022120437
(43) Veröffentlichungstag der Anmeldung: 18.06.2025
(73) Patentinhaber: KNORR-BREMSE Systeme für Nutzfahrzeuge GmbH, 80809 München (DE)
(72) Erfinder: SCHNITTGER, Karsten, 80935 München (DE); AWRATH, Martin, 80995 München (DE)
(86) Internationale Anmeldenummer: PCT/EP2023/069383
(87) Internationale Veröffentlichungsnummer: WO 2024/033003

(56) Entgegenhaltungen:
- EP-A1- 3 996 191
- DE-A1- 102004 036 820
- DE-A1- 102013 107 743

## Beschreibung

Die vorliegende Erfindung betrifft eine Entlüftungsvorrichtung, insbesondere zur Verwendung mit wenigstens einer Ventileinheit oder einer Mehrzahl von Ventileinheiten, sowie ein Bremssystem mit einer solchen Entlüftungsvorrichtung.

Lastkraftwagen (LKWs) werden üblicherweise mit einem pneumatischen Bremssystem ausgestattet. Geräteeinheiten eines solchen Bremssystems verwenden oft pneumatische Ventile, die einen Volumenstrom nach außen bzw. zu einer Außenseite, und damit zur umgebenden Atmosphäre, entlüften oder weisen diverse Wirkflächen auf, die mit Umgebungsdruck verbunden sein müssen.

Zumeist entlüften Ventile in einer ihrer Schaltstellungen einen Volumenstrom nach außen. Hierbei können Ventile interne Wirkflächen aufweisen, die möglichst konstant einem Umgebungsdruckniveau ausgesetzt sein sollen. Solche Räume, beispielsweise unterhalb eines Kolbens mit einer darin angeordneten Feder, müssen deshalb eine immer offene Verbindung nach außen aufweisen und werden als "atmende Räume" bezeichnet.

Die Anordnung und Ausrichtung der Ventile erfolgt zumeist in vertikaler Richtung, sodass sich eine nach unten, d.h. in Richtung der Schwerkraft, weisende Bohrung pro Ventil als Entlüftung anbietet.

Diese Entlüftungsbohrungen weisen jedoch nur einen geringen oder keinen Schutz gegen eindringendes Wasser, z.B. beim Reinigen mit einem Hochdruckreiniger, auf. Ferner ist es im Falle von komplexen Geräteeinheiten eines LKW Bremssystems nicht immer möglich, dass alle Ventile in dieser Form, d.h. in vertikaler Richtung, angeordnet werden können, um ihre Entlüftungsbohrungen entsprechend auszurichten. Die eingedrungene Feuchtigkeit bzw. Flüssigkeit kann in diesem Fall nicht bzw. nicht vollständig entlang der wirkenden Schwerkraft abfließen. Insbesondere bei einem Absinken der Temperatur unter den Gefrierpunkt kann das verbleibende Wasser in den Ventilen gefrieren und diese blockieren.

Die Offenlegungsschrift DE 10 2013 107743 A1 offenbart ein Magnetventil mit zwei separaten Entlüftungskanälen, die eintretender Flüssigkeit durch ihre Zickzack-Anordnung mehrere Prallwände entgegenstellen.

Es ist die Aufgabe der vorliegenden Erfindung, eine Entlüftungsvorrichtung der eingangs genannten Art in vorteilhafter Weise weiterzubilden, insbesondere dahingehend, dass einem Eindringen von Feuchtigkeit bzw. Flüssigkeiten in die Entlüftungsvorrichtung zumindest im Wesentlichen vorgebeugt bzw. entgegengewirkt und ein Abfließen von eingedrungener Feuchtigkeit bzw. Flüssigkeit optimiert werden kann, vorzugsweise indem eine Fluidverbindung mittels Umlenkpunkten ein direktes, unmittelbares Eindringen eines Wasserstrahls oder dergleichen verhindert bzw. reduziert, sodass eine Entlüftungsfunktion für eine Mehrzahl von Geräteeinheiten, wie Ventilen, sichergestellt werden kann. Ferner ist es die Aufgabe der vorliegenden Erfindung ein Bremssystem mit einer solchen Entlüftungsvorrichtung anzugeben. Diese Aufgabe wird erfindungsgemäß gelöst durch eine Entlüftungsvorrichtung mit den Merkmalen des Anspruchs 1 und einem Bremssystem mit den Merkmalen des Anspruchs 11. Weitere vorteilhafte Ausführungsformen sind in den abhängigen Ansprüchen angegeben.

Danach ist vorgesehen, dass eine Entlüftungsvorrichtung, insbesondere zur Verwendung mit wenigstens einer Ventileinheit oder einer Mehrzahl von Ventileinheiten, mit wenigstens einem Luftkammerelement, wenigstens einem Abströmabschnitt und wenigstens einem ersten Entlüftungskanal bereitgestellt ist, zur Ausbildung einer Fluidverbindung zwischen einer Außenseite der Entlüftungsvorrichtung und dem wenigstens einen Luftkammerelement, wobei der Abströmabschnitt die Fluidverbindung zwischen dem Luftkammerelement und dem wenigstens einen ersten Entlüftungskanal bereitstellt. Der erste Entlüftungskanal weist erste und zweite Öffnungen auf. Der ersten Öffnung ist eine erste Prallfläche und der zweiten Öffnung ist eine zweite Prallfläche entgegengerichtet, wobei die ersten und zweiten Prallflächen zu den ersten und zweiten Öffnungen in Richtung einer ersten Längsachse des ersten Entlüftungskanals jeweils beabstandet sind und sich jeweils über wenigstens eine Querschnittsfläche des ersten Entlüftungskanals, insbesondere jeweils über wenigstens eine Querschnittsfläche der ersten und zweiten Öffnung, erstrecken, sodass die Fluidverbindung zwischen den ersten und zweiten Öffnungen zu einer Außenseite der Entlüftungsvorrichtung jeweils entlang wenigstens eines Abschnitts der ersten und zweiten Prallfläche ausgebildet ist. Die Erfindung basiert auf dem Grundgedanken, dass eine Entlüftung mit einem Spritzschutz bereitgestellt werden kann, insbesondere ein gemeinsamer Spritzschutz für mehrere (horizontal übereinander liegende) Ventile. Hierbei soll durch die Entlüftungsvorrichtung insbesondere das Prinzip eines (gemeinsamen) Entlüftungsraumes/einem (gemeinsamen) Luftkammerelement mit einem (vertikal) unten angeordneten Abströmabschnitt genutzt werden, der in einen Entlüftungskanal mit Öffnungen und mit jeweils über den Öffnungen ausgebildeten/angeordneten Prallflächen mündet.

Des Weiteren kann anhand der Ausgestaltung und Anordnung der Prallflächen wenigstens ein Umlenkpunkt bereitgestellt werden, sodass ein Eindringen von Feuchtigkeit bzw. Flüssigkeit in Richtung einer ersten Längsachse des ersten Entlüftungskanals verhindert und/oder vermindert werden kann. Vielmehr ist die Anordnung und Ausgestaltung der Prallflächen derart vorgesehen, dass beispielsweise ein Wasserstrahl zum Eintritt in den ersten Entlüftungskanal umgelenkt wird. Das Umlenken bzw. Aufbrechen bzw. Ablenken des Wasserstrahls bedingt, dass einem tiefen Eindringen von Feuchtigkeit/Flüssigkeit bis in das wenigstens eine Luftkammerelement zumindest im Wesentlichen vorgebeugt und/oder vermindert werden kann.

Darüber hinaus ermöglicht die Ausbildung des Abströmabschnitts an einem unteren Ende des Luftkammerelementes sowie des Entlüftungskanals mit einer ersten und zweiten Öffnung, dass sowohl ein Abfließen von Feuchtigkeit/Flüssigkeit erleichtert sowie einem Aufsteigen von Flüssigkeit entlang des ersten Entlüftungskanals und/oder entlang des Abströmabschnitts bis in das Luftkammerelement zumindest im Wesentlichen vorgebeugt bzw. entgegengewirkt werden kann.

Die Anordnung des Abströmabschnitts an einer (vertikal) unten liegenden Position des Luftkammerelements ist im Sinne der vorliegenden Erfindung insbesondere mit Blick auf die zweckmäßige Verwendung und Ausrichtung der Entlüftungsvorrichtung bzw. eines korrespondierenden Bremssystems zu verstehen. Feuchtigkeit bzw. Flüssigkeit kann der Schwerkraft folgend aus dem Luftkammerelement über den Abströmabschnitt entweichen bzw. abfließen.

Die Entlüftung(en) z.B. einer Mehrzahl von Ventilen kann/können über ein gemeinsames Luftkammerelement der Entlüftungsvorrichtung erfolgen, welches durch die Entlüftungsvorrichtung ausgebildet ist. Dieses Luftkammerelement, als ein gemeinsamer Raum, ist an einer vertikal unterhalb der Ventile liegenden Position mit mindestens einem nach unten oder zur Seite weisenden Abströmabschnitt verbunden, um eine Entlüftung nach außen/zu einer Außenseite der Entlüftungsvorrichtung zu ermöglichen.

Bei der Entlüftung kann es sich insbesondere um eine sogenannte Sekundärentlüftung handeln, also um die Entlüftung von Ventilen die nur einen kleinen Volumenstrom entlüften müssen, z.B. Magnetventile. Des Weiteren kann unter der Entlüftung auch das Anschließen von "atmende Räumen", wie Federräumen oder dergleichen, an den (atmosphärischen) Umgebungsdruck verstanden werden.

Unter einer Fluidverbindung ist im Sinne der vorliegenden Erfindung insbesondere eine Verbindung zur Entlüftung vorgesehen. So kann eine Fluidverbindung zwischen dem Luftkammerelement und der ersten/zweiten Öffnung des ersten Entlüftungskanals, und entlang wenigstens eines Teils der zugehörigen Prallflächen, sicherstellen, dass eine Entlüftung beispielsweise einer Mehrzahl von an das Luftkammerelement angeschlossenen Ventile zweckmäßig erfolgen kann.

Die Öffnungen des wenigstens einen ersten Entlüftungskanals erlauben hierbei, dass eingedrungene Feuchtigkeit/Flüssigkeit abfließen kann und/oder beugen einem Eindringen von Feuchtigkeit/Flüssigkeit in das Luftkammerelement zumindest im Wesentlichen vor, insbesondere durch (zumindest weitestgehende) Vermeidung eines Staudrucks innerhalb des wenigstens einen ersten Entlüftungskanals und/oder des Abströmabschnitts.

Die Öffnungen können vorzugsweise an gegenüberliegenden Enden des ersten Entlüftungskanals ausgebildet sein. Alternativ können die ersten/zweiten Öffnungen entlang des ersten Entlüftungskanals ausgebildet sein.

Indem mittels der vorliegenden Erfindung, insbesondere anhand der Prallflächen sowie der mindestens zwei Öffnungen der Entlüftungskanäle, sowohl ein Spritzschutz sowie ein Ablauf von eingedrungener Flüssigkeit insbesondere aufgrund der Vermeidung bzw.

Reduzierung eines Staudrucks bereitgestellt werden kann, kann auch die Fluidverbindung vom Luftkammerelement bis zur atmosphärischen Außenseite der Entlüftungsvorrichtung zweckmäßig sichergestellt werden.

Im Sinne der vorliegenden Erfindung kann ein Abströmabschnitt insbesondere eine Abströmöffnung, ein Abströmkanal und/oder dergleichen sein, sodass eine Fluidverbindung zwischen dem Luftkammerelement und dem ersten Entlüftungskanal bereitgestellt werden kann. Erfindungsgemäß ist der Abströmabschnitt an einem unteren Ende des Luftkammerelementes angeordnet bzw. ausgebildet.

Unter einer Prallfläche kann eine spezifisch geformte Fläche sowie auch zugehörige (abgerundete) Flächenübergänge zu benachbarten Flächen verstanden werden. In diesem Sinne können beispielsweise (abgerundete) Flächenübergänge ebenfalls der jeweiligen Prallfläche zugeordnet sein.

Des Weiteren sind die ersten und zweiten Prallflächen zu der ersten und zweiten Öffnung in Richtung einer ersten Längsachse des ersten Entlüftungskanals jeweils beabstandet und erstrecken sich jeweils über wenigstens eine Querschnittsfläche des ersten Entlüftungskanals, insbesondere eine Querschnittsfläche der ersten und zweiten Öffnung.

Insbesondere sind die Prallflächen derart vorgesehen, dass eine Fluidverbindung zwischen der ersten und zweiten Öffnung zu einer Außenseite der Entlüftungsvorrichtung jeweils entlang wenigstens eines Abschnitts der ersten und zweiten Prallfläche ausgebildet ist.

Anhand eines Abstands zwischen den Prallflächen und der jeweiligen Öffnung des Entlüftungskanals kann eine Fluidverbindung sichergestellt werden. Diese Fluidverbindung weist anhand der Ausgestaltung der Prallflächen wenigstens einen Umlenkpunkt auf und verläuft an einem Teil der Prallfläche vorbei in den Entlüftungskanal hinein. Die Fluidverbindung verläuft nicht allein/ausschließlich in Richtung der (ersten) Längsachse des (ersten) Entlüftungskanals. Anhand der Prallflächen kann somit ein Spritzschutz bereitgestellt werden.

Des Weiteren kann der erste Entlüftungskanal entlang seiner ersten Längsachse einen kontinuierlichen oder einen variablen Querschnitt aufweisen. Die Öffnungen des ersten Entlüftungskanals weisen vorzugsweise gleiche Querschnitte auf.

Im Sinne der Bereitstellung eines Spritzschutzes bzw. eines Umlenkpunktes der Fluidverbindung sind die Prallflächen wenigstens in der Größe der Querschnittsfläche des Entlüftungskanals bzw. der jeweiligen ersten/zweiten Öffnung ausgebildet. Auf diese Weise kann ein lineares Einströmen/Eindringen von Flüssigkeit in den Entlüftungskanal allein in Richtung der zugehörigen Längsachse vermieden werden. Des Weiteren kann vorgesehen sein, dass der erste Entlüftungskanal entlang seiner ersten und zweiten Öffnung und der ersten und zweiten Prallflächen in jeweils einen zweiten Entlüftungskanal mündet. Ferner ist vorstellbar, dass die zweiten Entlüftungskanäle jeweils dritte und vierte Öffnungen aufweisen, wobei wenigstens eine dritte Prallfläche in einem Abstand zu und über wenigstens eine Querschnittsfläche der zweiten Entlüftungskanäle, insbesondere eine Querschnittsfläche der dritten Öffnung, ausgebildet ist.

Die dritte Öffnung und die vierte Öffnung können vorzugsweise jeweils an gegenüberliegenden Enden des zweiten Entlüftungskanals ausgebildet sein. Alternativ können die dritten/vierten Öffnungen entlang des zweiten Entlüftungskanals ausgebildet sein.

Insbesondere kann der Spritzschutz weiter optimiert und ergänzt werden, indem mehrere Entlüftungskanäle derart angeordnet bzw. ausgebildet werden, dass die Fluidverbindung zwischen der Außenseite der Entlüftungsvorrichtung und dem Luftkammerelement mehrere Umlenkpunkte aufweist, die insbesondere durch die verschiedenen Prallflächen in Kombination mit den jeweils zugeordneten Öffnungen der Entlüftungskanäle ausgebildet sind.

Der erste und zweite Entlüftungskanal können winkelig versetzt zueinander ausgerichtet bzw. angeordnet sein, vorzugsweise in einem von Winkel von ca. 90°, sodass ein Umlenkpunkt entlang des Übergangs zwischen dem ersten und zweiten Entlüftungskanals ausgebildet ist. Ferner können die erste/zweite Prallfläche als ein Teil des zweiten Entlüftungskanals oder separat, als zusätzliche Elemente im Bereich der Öffnungen des ersten Entlüftungskanals ausgebildet sein.

Des Weiteren kann vorgesehen sein, dass im Bereich der vierten Öffnung keine Prallfläche ausgebildet ist. Dies ermöglicht eine variablere Ausgestaltung der Entlüftungskanäle, wobei durch die fehlende vierte Prallfläche kein, zumindest kein wesentlicher, Nachteil bezüglich der Vorbeugung des Eindringens von Feuchtigkeit/Flüssigkeit besteht.

Alternativ kann eine vierte Prallfläche im Bereich der vierten Öffnung bzw. der vierten Öffnung entgegengerichtet ausgebildet sein.

Anhand der zweiten Entlüftungskanäle, ausgebildet in Form einer Reihenschaltung mit den ersten Entlüftungskanälen, kann einem Eindringen von Feuchtigkeit bzw. Flüssigkeit vorgebeugt bzw. ein solches reduziert werden.

Im Übrigen kann vorgesehen sein, dass die ersten und zweiten Prallflächen größer ausgebildet sind als die Querschnittsflächen des ersten Entlüftungskanals, insbesondere größer ausgebildet sind als die jeweilige Querschnittsfläche der ersten und zweiten Öffnung. Ferner ist es möglich, dass die dritte Prallfläche größer ausgebildet ist als die Querschnittsfläche des zweiten Entlüftungskanals, insbesondere größer ausgebildet sind als die Querschnittsfläche der dritten Öffnung.

Auf diese Weise kann einem Eindringen von Feuchtigkeit/Flüssigkeit in Richtung der Längsachse des jeweiligen Entlüftungskanals vorgebeugt werden. Insbesondere kann durch die Erstreckung der Prallflächen über den Querschnitt der jeweils zugeordneten Öffnung oder darüber hinaus, mindestens ein Umlenkpunkt geschaffen werden, der eine Spritzschutz-Funktion ausüben kann.

Darüber hinaus ist es vorstellbar, dass die Prallflächen derart ausgebildet und angeordnet sind, dass die Fluidverbindung zwischen dem Luftkammerelement und einer Außenseite der Entlüftungsvorrichtung entlang der Öffnungen mehrere Umlenkpunkte aufweist.

Vorzugsweise ist wenigstens jeweils ein Umlenkpunkt derart mittels der Prallflächen bereitgestellt, dass einem Eindringen von Schmutz, Flüssigkeiten wie Wasser und der gleichen vorgebeugt bzw. reduziert werden kann.

Insbesondere kann beispielsweise ein Hochdruck-Wasserstrahl nicht unmittelbar in den Entlüftungskanal eindringen, sondern wird anhand der strukturellen Anordnung sowie Ausbildung der Entlüftungskanäle mit den Prallflächen innerhalb der Entlüftungsvorrichtung zumindest im Wesentlichen abgelenkt bzw. aufgeteilt.

Ferner ist es möglich, dass die Entlüftungsvorrichtung einteilig oder mehrteilig ausgebildet ist, insbesondere mit einem ersten Seitenteil und einem Deckelelement oder mit zueinander korrespondierenden ersten und zweiten Seitenteilen sowie einem zwischen den mehreren Teilen angeordneten Dichtelement ausgebildet ist.

Demnach kann die Entlüftungsvorrichtung ein erstes Seitenteil, in Form eines strukturierten Hauptkörpers mit unter anderem dem Luftkammerelement, aufweisen, sowie einen unstrukturiertes Deckelelement zum Verschließen der Strukturen des ersten Seitenteils.

Alternativ kann die Entlüftungsvorrichtung mit einem ersten Seitenteil und einem dazu korrespondierenden zweiten Seitenteil ausgebildet sein, wobei das erste und zweite Seitenteil jeweils als strukturierte Seitenteile ausgebildet sind. Die beiden Seitenteile können symmetrische Strukturen aufweisen oder asymmetrische Strukturen.

Auf diese Weise können unter anderem das Luftkammerelement, der Abströmabschnitt und/oder der erste Entlüftungskanal symmetrisch aufgeteilt in den beiden Seitenteilen ausgebildet sein, oder asymmetrisch aufgeteilt sein, z.B. indem das Luftkammerelement zumindest vornehmlich im ersten Seitenteil ausgebildet ist und/oder der erste Entlüftungskanal zumindest vornehmlich im zweiten Seitenteil ausgebildet ist.

Mit dem optionalen Dichtelement zwischen den zwei Bauteilen der Entlüftungsvorrichtung, das heißt zwischen dem ersten Seitenteil und dem Deckelelement oder zwischen dem ersten und zweiten Seitenteil, muss beim Eindringen von Wasser in dem nach oben abgedichteten gemeinsamen Raum das Luftvolumen dort komprimiert werden, um bis zu den Ventilen bzw. den zu entlüftenden Strukturen zu gelangen.

Neben einer Spritzschutzfunktion, insbesondere mittels der Prallflächen, und einer Entlüftungs- bzw. Abfließfunktion, insbesondere mittels der Öffnungen der Entlüftungskanäle, wird somit ein fluidstatischer/-dynamischer Widerstand gegen ein Eindringen von Flüssigkeit in die Entlüftungsvorrichtung bereitgestellt.

Des Weiteren kann vorgesehen sein, dass der wenigstens eine Abströmabschnitt an einem in vertikaler Richtung unteren Ende des Luftkammerelementes ausgebildet ist. Ferner ist denkbar, dass der wenigstens eine Abströmabschnitt als wenigstens eine Abströmöffnung oder als wenigstens eine Abströmöffnung in Kombination mit wenigstens einem Abströmkanal ausgebildet ist, zur Bereitstellung einer Fluidverbindung zwischen dem Luftkammerelement und dem wenigstens einen ersten Entlüftungskanal.

Vorzugsweise ist der Abströmabschnitt gegenüber bzw. entlang des Luftkammerelementes derart angeordnet, dass Feuchtigkeit bzw. Flüssigkeit in Richtung der wirkenden Schwerkraft austreten bzw. abfließen kann.

Des Weiteren kann der Abströmabschnitt als Abströmöffnung in Verbindung mit einem Abströmkanal ausgebildet werden, vorzugsweise im Sinne eines Steigkanals. Eindringende Feuchtigkeit bzw. Flüssigkeit, wie Wasser, muss demzufolge entlang des Abströmabschnitts gegen die Schwerkraft aufsteigen, um bis zu den Ventilen bzw. den zu entlüftenden Strukturen gelangen zu können.

Im Übrigen ist es vorstellbar, dass die Entlüftungsvorrichtung zur Aufnahme und Entlüftung mehrerer Ventile in Fluidverbindung mit dem Luftkammerelement ausgebildet ist.

Auf diese Weise ist eine zentrale Entlüftung für mehrere zu entlüftende Strukturen, wie beispielsweise Ventile, bereitstellbar. Die erfindungsgemäße Infrastruktur zur Entlüftung kann anhand einer Vergrößerung oder Verkleinerung insbesondere des Luftkammerelementes auf einfache Weise an die Anzahl von Ventilen bzw. zu entlüftenden Strukturen angepasst werden.

In diesem Sinne stellt das Luftkammerelement einen gemeinsamen Raum dar, der von der Entlüftungsvorrichtung bereitgestellt wird, beispielsweise durch das erste und zweite Seitenteil in Kombination mit einem dazwischen angeordneten Dichtungselement. Gemäß eines weiteren nebengeordneten Aspekt betrifft die vorliegende Erfindung ein Bremssystem, insbesondere für Lastkraftwagen, mit wenigstens einer erfindungsgemäßen Entlüftungsvorrichtung.

Weitere Einzelheiten und Vorteile der Erfindung sollen nun anhand der in den Zeichnungen dargestellten Ausführungsbeispiele näher erläutert werden.

Es zeigen:
- Fig. 1: eine perspektivische Darstellung eines ersten Ausführungsbeispiels einer Entlüftungsvorrichtung;
- Fig. 2: eine perspektivische Darstellung eines zweiten Ausführungsbeispiels einer Entlüftungsvorrichtung; und
- Fig. 3: eine perspektivische Darstellung eines dritten Ausführungsbeispiels einer Entlüftungsvorrichtung gemäß den Fig. 1 und 2.

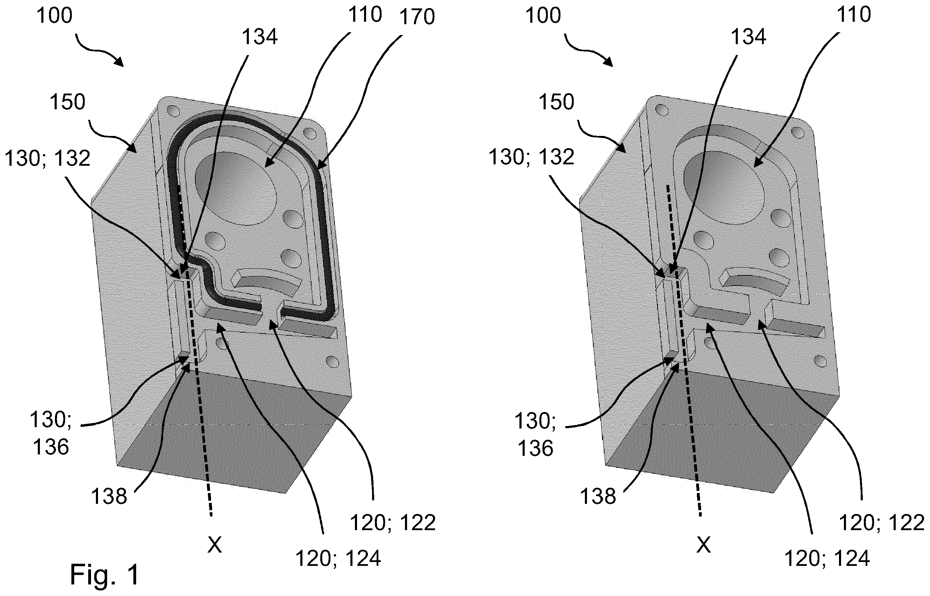

Fig. 1 zeigt eine perspektivische Darstellung eines ersten Ausführungsbeispiels einer Entlüftungsvorrichtung 100.

Gemäß dem ersten Ausführungsbeispiel ist die Entlüftungsvorrichtung 100 mit einem ersten Seitenteil 150 ausgebildet.

Das Seitenteil 150 kann ein Dichtelement 170 aufweisen (siehe linke Darstellung in Fig. 1) oder ohne Dichtelement 170 ausgebildet sein (siehe rechte Darstellung in Fig. 1). Die Entlüftungsvorrichtung 100 weist ferner ein Luftkammerelement 110, einen Abströmabschnitt 120 und wenigstens einen ersten Entlüftungskanal 130 auf.

Das Luftkammerelement 110 kann derart ausgebildet sein, dass eine Entlüftung für mehrere Ventile, mehrere Geräteeinheiten oder dergleichen bereitgestellt werden kann. Insbesondere kann das erste Seitenteil 150 im Bereich des Luftkammerelementes 110 eine Mehrzahl an Aufnahmen für Ventile, Geräteeinheiten oder dergleichen aufweisen. Gemäß Fig. 1 kann der Abströmabschnitt 120 mit einer Abströmöffnung 122 ausgebildet sein, die in einen Abströmkanal 124 übergehen kann.

Der Abströmabschnitt 120, insbesondere die Abströmöffnung 122, kann an einer gemäß Fig. 1 (in vertikaler Richtung) unteren Seite des Luftkammerelementes 110 ausgebildet sein.

Insbesondere kann der Abströmabschnitt 120 im Kontext einer zweckgemäßen Verwendung an einer vertikal unteren Seite des Luftkammerelementes 110 ausgebildet sein, um ein Ablaufen von Feuchtigkeit/Flüssigkeit aus dem Luftkammerelement 110 in Richtung der wirkenden Schwerkraft zu ermöglichen bzw. einem Eindringen von Feuchtigkeit/Flüssigkeit entgegenzuwirken.

Der Abströmkanal 124 kann gemäß Fig. 1 in im Wesentlichen horizontaler Richtung verlaufen und eine Fluidverbindung über die Abströmöffnung 122 zu dem Luftkammerelement 110 bereitstellen.

Gemäß Fig. 1 kann der Abströmkanal 124 einen sich verjüngenden Querschnitt aufweisen, insbesondere sodass ein Ablaufen von Feuchtigkeit/Flüssigkeit erleichtert werden kann und/oder ein Eindringen von Feuchtigkeit/Flüssigkeit zumindest im Wesentlichen vorgebeugt bzw. entgegengewirkt werden kann.

Der Abströmkanal 124 kann in einen ersten Entlüftungskanal 130 übergehen.

Der Entlüftungskanal 130 ist gemäß Fig. 1 mit einer ersten Öffnung 132 und einer zweiten Öffnung 136 ausgebildet.

Gemäß Fig. 1 ist vorgesehen, dass die erste und zweite Öffnungen 132; 136 an gegenüberliegenden Enden des ersten Entlüftungskanals 130 ausgebildet sind.

Alternativ können die erste/zweite Öffnung 132; 136 entlang des ersten Entlüftungskanals vorgesehen sein.

Die ersten/zweiten Öffnungen 132; 136 sind in Kombination mit einer ersten bzw. zweiten Prallfläche 134; 138 ausgebildet.

Die erste/zweite Prallfläche 134; 138 ist jeweils in einem Abstand zu der ersten/zweiten Öffnung 132; 136 angeordnet und erstreckt sich mindestens über den Querschnitt der ersten/zweiten Öffnungen 132; 136.

Insbesondere sind die ersten/zweiten Prallflächen 134; 138 in Richtung einer ersten Längsachse X des ersten Entlüftungskanals 130 gegenüber der ersten bzw. zweiten Öffnung 132; 136 beabstandet ausgebildet und angeordnet.

Die Prallflächen 134; 138 können als ein Wandabschnitt der Fluidverbindung innerhalb der Entlüftungsvorrichtung 100 bzw. des Seitenteils 150 ausgebildet sein oder als separate Flächen innerhalb/entlang der Fluidverbindung vorgesehen sein.

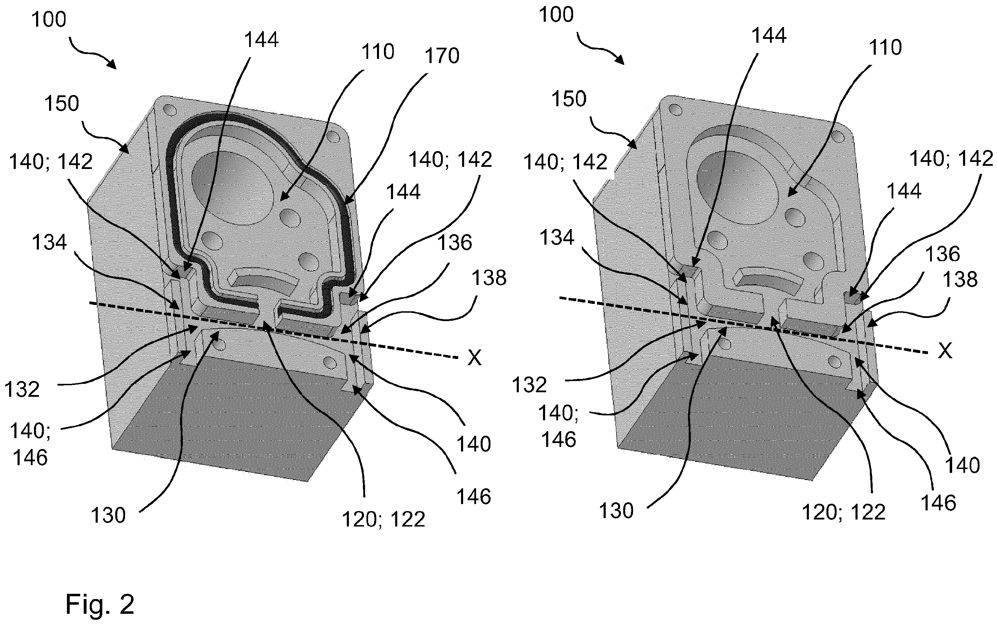

Entlang der Fluidverbindung von einer Außenseite der Entlüftungsvorrichtung 100 und entlang wenigstens eines Teils/Abschnitts der Prallflächen 134; 138 über die Öffnungen 132; 136 in den Entlüftungskanal 130 wird mindestens ein Umlenkpunkt ausgebildet. Fig. 2 zeigt eine perspektivische Darstellung eines zweiten Ausführungsbeispiels einer Entlüftungsvorrichtung 100.

Ebenso wie im ersten Ausführungsbeispiel, kann auch das zweite Ausführungsbeispiel der Entlüftungsvorrichtung 100 als ein erstes Seitenteil 150 mit dem Dichtelement 170 (siehe linke Darstellung gemäß Fig. 2) oder ohne ein zusätzliches Dichtelement 170 (siehe rechte Darstellung gemäß Fig. 2) vorgesehen sein.

Das in Fig. 2 dargestellte Ausführungsbeispiel der erfindungsgemäßen Entlüftungsvorrichtung 100 weist im Wesentlichen dieselben strukturellen und funktionalen Merkmale wie das in Fig. 1 dargestellte erste Ausführungsbeispiel der Entlüftungsvorrichtung 100 auf. Lediglich die folgenden strukturellen und funktionalen Merkmalsunterschiede sollen aufgezeigt werden:
Insbesondere weist das zweite Ausführungsbeispiel gemäß Fig. 2 gegenüber dem ersten Ausführungsbeispiel gemäß Fig. 1 einen ersten Entlüftungskanal 130 und einen zweiten Entlüftungskanal 140 auf.

Gemäß Fig. 2 ist der Abströmabschnitt 120 mit einer Abströmöffnung 122 ausgebildet. Die Abströmöffnung 122 ist an einer in vertikaler Richtung, und in Wirkungsrichtung der Schwerkraft, unteren Seite des Luftkammerelementes 110 angeordnet.

An der Abströmöffnung 120 ist der erste Abströmkanal 124 angeordnet bzw. angeschlossen.

Gemäß Fig. 2 kann der erste Entlüftungskanal 130 in horizontaler Richtung verlaufen. Des Weiteren kann der erste Entlüftungskanal 130 einen entlang der ersten Längsachse X variablen Querschnitt aufweisen.

Der erste Entlüftungskanal 130 weist ferner erste und zweite Öffnungen 132; 136 auf.

Nach dem Ausführungsbeispiel in Fig. 2 sind die erste und zweite Öffnungen 132; 136 an gegenüberliegenden Enden des ersten Entlüftungskanals 130 vorgesehen. Alternativ können die Öffnungen 132; 136 entlang des ersten Entlüftungskanals 130 ausgebildet sein.

Im Bereich der ersten/zweiten Öffnung 132; 136 ist jeweils die erste/zweite Prallfläche 134; 138 ausgebildet, insbesondere in Richtung der ersten Längsachse X beabstandet zu den Öffnungen 132; 134.

Die erste/zweite Prallfläche 134; 138 erstreckt sich wenigstens über den Querschnitt der ersten/zweiten Öffnung 132; 136 und ist vorzugsweise größer ausgestaltet als der jeweilige Querschnitt der jeweils zugeordneten ersten/zweiten Öffnung 132; 136. Gemäß der Fig. 2 geht der erste Entlüftungskanal 130 entlang der ersten/zweiten Öffnung 132; 136 in einen zweiten Entlüftungskanal 140 über.

Der erste und zweite Entlüftungskanal 130; 140 sind winkelig versetzt zueinander ausgebildet, gemäß Fig. 2 beispielsweise um einen Winkel von ca. 90°.

Insbesondere sind in dem Seitenteil 150 zwei zweite Entlüftungskanäle 140 symmetrisch zueinander ausgebildet.

Die zweiten Entlüftungskanäle 140 weisen jeweils dritte und vierte Öffnungen 142; 146 auf.

Ferner ist wenigstens eine dritte Prallfläche 144 vorgesehen, vorzugsweise in einem Abstand in Längsrichtung bzw. entlang einer weiteren/zweiten Längsachse des zweiten Entlüftungskanals 140 zu der dritten Öffnung 142.

Gemäß Fig. 2 kann die vierte Öffnung 146 ohne eine vierte Prallfläche ausgebildete sein. Alternativ kann im Bereich der vierten Öffnung 146 eine vierte Prallfläche angeordnet werden.

Die Prallflächen 134; 138; 144 können jeweils als ein Wandabschnitt der Fluidverbindung innerhalb beispielsweise des ersten Seitenteils 150 vorgesehen sein oder als separat ausgebildete Strukturen.

Des Weiteren können gemäß Fig. 1 und Fig. 2 weitere Prallflächen entlang der Fluidverbindung vorgesehen sein, beispielsweise im Bereich der Abströmöffnung 120 innerhalb der Luftkammereinheit 110.

Sämtliche Prallflächen können als Wandabschnitte entlang der Fluidverbindung oder als separate Strukturen, beispielsweise innerhalb der Luftkammereinheit 110 und der Abströmöffnung 122 als konvexe Fläche entgegengerichtet, ausgebildet sein.

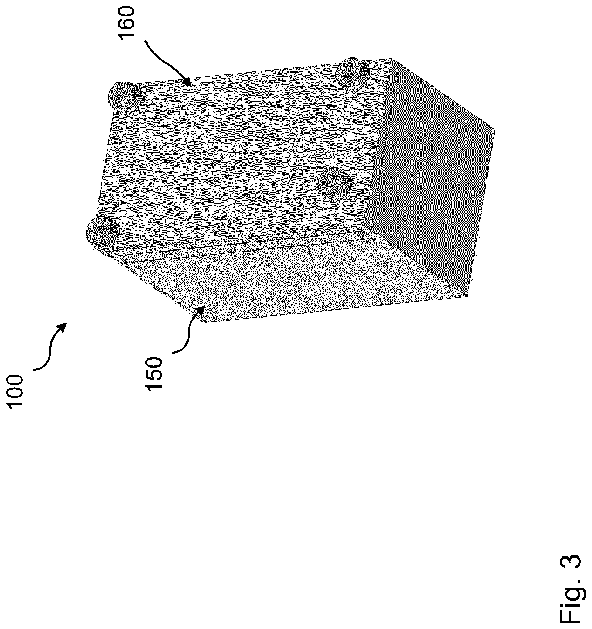

Fig. 3 zeigt eine perspektivische Darstellung eines dritten Ausführungsbeispiels einer Entlüftungsvorrichtung 100 gemäß den Fig. 1 und 2.

Wie in Fig. 3 dargestellt, kann das erste Seitenteil 150 der Entlüftungsvorrichtung 100 mit einem Deckelelement 160 verschlossen sein. Optional kann ein Dichtelement 170 zwischen dem Deckelelement 160 und dem ersten Seitenteil 150 angeordnet sein. Alternativ kann neben dem ersten Seitenteil 150 ein korrespondierend ausgestaltetes zweites Seitenteil bereitgestellt werden.

Die Strukturen der Entlüftungsvorrichtung 100, wie das Luftkammerelement 110 und/oder der Abströmabschnitt 120 und/oder die ersten/zweiten Entlüftungskanäle 130; 140, können symmetrisch verteilt entlang der zueinander anzuordnenden Flächen in den ersten/zweiten Seitenteilen ausgebildet sein, oder in dem ersten/zweiten Seitenteil asymmetrisch verteilt ausgestaltet sein.

So ist es möglich, dass das Luftkammerelement 110 vornehmlich in dem ersten Seitenteil 150 ausgebildet ist, wobei der erste Entlüftungskanal 130 vornehmlich in dem zweiten Seitenteil ausgebildet sein kann.

Die Funktion der Entlüftungsvorrichtung 100 lässt sich nun wie folgt beschreiben: Anhand des entlang der Luftkammereinheit 110 (vertikal) unten angeordneten Abströmabschnitts 120 kann eingedrungene Feuchtigkeit/Flüssigkeit in Richtung der während des verwendungsgemäßen Gebrauchs wirkenden Schwerkraft aus dem Luftkammerelement 110 abgeleitet werden.

Des Weiteren ist durch die Anordnung des Abströmabschnitts 120, insbesondere der Abströmöffnung 122, gewährleistet, dass Flüssigkeit ausschließlich in vertikaler Richtung in das Luftkammerelement 110 eintreten kann, wobei das Luftvolumen innerhalb des Luftkammerelement 110 komprimiert wird.

Die strukturelle Anordnung insbesondere der Abströmöffnung 122 stellt einen Schutz gegen das Eintreten von Flüssigkeit in das Luftkammerelement 110 dar und kann dem Eintreten entgegenwirken.

Dem Eintreten von Flüssigkeit in die Luftkammereinheit 110 kann ferner durch die Ausbildung eines Abströmkanals 124 entgegengewirkt werden, indem der Abströmkanal 124 im Sinne eines Steigkanals vorgesehen sein kann.

Im Bereich der Öffnungen 132; 136; 142 der ersten/zweiten Entlüftungskanäle 130; 140 können die ersten/zweiten/dritten Prallflächen 134; 138; 144 eine Spritzschutz-Funktion ausüben, insbesondere indem eine Fluidverbindung zwischen der Außenseite der Entlüftungsvorrichtung 100 und dem Luftkammerelement 110 wenigstens entlang eines Umlenkpunktes verläuft.

Ein Umlenkpunkt entlang der Fluidverbindung kann verhindern, dass ein Wasserstrahl oder dergleichen direkt in Längsrichtung einer der Entlüftungskanäle 130; 140 in die Entlüftungsvorrichtung 100 eindringen kann.

Durch Umlenken bzw. Aufspalten eines Wasserstrahls mittels der Prallflächen 134; 138; 144 und der Entlüftungskanäle 130; 140 kann ein (ungehindertes) Eindringen von Feuchtigkeit/Flüssigkeit in die Entlüftungsvorrichtung 100 zumindest im Wesentlichen verhindert bzw. entgegengewirkt werden.

Zusammenfassend kann anhand der erfindungsgemäßen Entlüftungsvorrichtung 100 eine vorteilhafte Entlüftung für vorzugsweise eine Mehrzahl von zu entlüftenden Geräteeinheiten bzw. Ventilen bereitgestellt werden.

Es kann insbesondere anhand der Prallflächen 134; 138; 144 eine Spritzschutz-Funktion bereitgestellt werden, wobei die Entlüftungseinheit 100 einem Eindringen von Feuchtigkeit/Flüssigkeit zumindest im Wesentlichen vorbeugt bzw. entgegenwirkt, sowie anhand von Öffnungen 132; 136; 142; 146 der Entlüftungskanäle 130; 140 ein Ablauf von eingedrungener Feuchtigkeit/Flüssigkeit erleichtert bzw. gefördert bzw. unterstützt werden kann.

Des Weiteren kann der Abströmabschnitt 120 mit einer Abströmöffnung 122, insbesondere in Kombination mit einem Abströmkanal 124, ausgebildet werden, um ein Aufsteigen von Feuchtigkeit/Flüssigkeit bis in das (gemeinsame) Luftkammerelement 110 der vorzugsweisen Mehrzahl von zu entlüftenden Geräteeinheiten/Ventilen entgegenzuwirken.

### BEZUGSZEICHENLISTE

- 100: Entlüftungsvorrichtung
- 110: Luftkammerelement
- 120: Abströmabschnitt
- 122: Abströmöffnung
- 124: Abströmkanal
- 130: erster Entlüftungskanal
- 132: erste Öffnung
- 134: erste Prallfläche
- 136: zweite Öffnung
- 138: zweite Prallfläche
- 140: zweiter Entlüftungskanal
- 142: dritte Öffnung
- 144: dritte Prallfläche
- 146: vierte Öffnung
- 150: erstes Seitenteil
- 160: Deckelelement
- 170: Dichtelement
- X: erste Längsachse

## Patentansprüche

1. Entlüftungsvorrichtung (100), insbesondere zur Verwendung mit wenigstens einer Ventileinheit oder einer Mehrzahl von Ventileinheiten,
mit wenigstens einem Luftkammerelement (110), wenigstens einem Abströmabschnitt (120) und wenigstens einem ersten Entlüftungskanal (130), zur Ausbildung einer Fluidverbindung zwischen einer Außenseite der Entlüftungsvorrichtung (100) und dem wenigstens einen Luftkammerelement (110),
wobei der Abströmabschnitt (120) die Fluidverbindung zwischen dem Luftkammerelement (110) und dem wenigstens einen ersten Entlüftungskanal (130) bereitstellt,
**dadurch gekennzeichnet, dass**
der erste Entlüftungskanal (130) erste und zweite Öffnungen (132; 136) aufweist, wobei der ersten Öffnung (132) eine erste Prallfläche (134) und der zweiten Öffnung (136) eine zweite Prallfläche (138) entgegengerichtet ist,
wobei die ersten und zweiten Prallflächen (134;138) zu den ersten und zweiten Öffnungen (132; 136) in Richtung einer ersten Längsachse (X) des ersten Entlüftungskanals (130) jeweils beabstandet sind und sich jeweils über wenigstens eine Querschnittsfläche des ersten Entlüftungskanals (130), insbesondere jeweils über wenigstens eine Querschnittsfläche der ersten und zweiten Öffnung (134; 138), erstrecken, sodass die Fluidverbindung zwischen den ersten und zweiten Öffnungen (132; 136) zu einer Außenseite der Entlüftungsvorrichtung (100) jeweils entlang wenigstens eines Abschnitts der ersten und zweiten Prallfläche (134; 138) ausgebildet ist.

2. Entlüftungsvorrichtung (100) nach Anspruch 1,
**dadurch gekennzeichnet, dass**
der erste Entlüftungskanal (130) entlang seiner ersten und zweiten Öffnung (132; 136) und der ersten und zweiten Prallflächen (134; 138) in jeweils einen zweiten Entlüftungskanal (140) mündet.

3. Entlüftungsvorrichtung (100) nach Anspruch 2,
**dadurch gekennzeichnet, dass**
die zweiten Entlüftungskanäle (140) jeweils dritte und vierte Öffnungen (142; 146) aufweisen,
wobei wenigstens eine dritte Prallfläche (144) in einem Abstand zu und über wenigstens eine Querschnittsfläche der zweiten Entlüftungskanäle (140), insbesondere eine Querschnittsfläche der dritten Öffnung (142), ausgebildet ist.

4. Entlüftungsvorrichtung (100) nach einem der vorhergehenden Ansprüche,
**dadurch gekennzeichnet, dass**
die ersten und zweiten Prallflächen (134; 138) größer ausgebildet sind als die Querschnittsflächen des ersten Entlüftungskanals (130), insbesondere größer ausgebildet sind als die jeweilige Querschnittsfläche der ersten und zweiten Öffnung (134; 138).

5. Entlüftungsvorrichtung (100) nach einem der vorhergehenden Ansprüche,
**dadurch gekennzeichnet, dass**
die dritte Prallfläche (144) größer ausgebildet ist als die Querschnittsfläche des zweiten Entlüftungskanals (140), insbesondere größer ausgebildet sind als die Querschnittsfläche der dritten Öffnung (142).

6. Entlüftungsvorrichtung (100) nach einem der vorhergehenden Ansprüche,
**dadurch gekennzeichnet, dass**
die Prallflächen (134; 138; 144) derart ausgebildet und angeordnet sind, dass die Fluidverbindung zwischen dem Luftkammerelement (110) und einer Außenseite der Entlüftungsvorrichtung (100) entlang der Öffnungen (132; 136; 142) wenigstens einen Umlenkpunkt aufweist.

7. Entlüftungsvorrichtung (100) nach einem der vorhergehenden Ansprüche,
**dadurch gekennzeichnet, dass**
die Entlüftungsvorrichtung (100) einteilig oder mehrteilig ausgebildet ist, insbesondere mit einem ersten Seitenteil (150) und einem Deckelelement (160) oder mit zueinander korrespondierenden ersten und zweiten Seitenteilen sowie einem zwischen den mehreren Teilen (150;160) angeordneten Dichtelement (170) ausgebildet ist.

8. Entlüftungsvorrichtung (100) nach einem der vorhergehenden Ansprüche,
**dadurch gekennzeichnet, dass**
der wenigstens eine Abströmabschnitt (120) an einem in vertikaler Richtung unteren Ende des Luftkammerelementes (110) ausgebildet ist.

9. Entlüftungsvorrichtung (100) nach einem der vorhergehenden Ansprüche,
**dadurch gekennzeichnet, dass**
der wenigstens eine Abströmabschnitt (120) als wenigstens eine Abströmöffnung (122) oder als wenigstens eine Abströmöffnung (122) in Kombination mit wenigstens einem Abströmkanal (124) ausgebildet ist, zur Bereitstellung einer Fluidverbindung zwischen dem Luftkammerelement (110) und dem wenigstens einen ersten Entlüftungskanal (130).

10. Entlüftungsvorrichtung (100) nach einem der vorhergehenden Ansprüche,
**dadurch gekennzeichnet, dass**
die Entlüftungsvorrichtung (100) zur Aufnahme und Entlüftung mehrerer Ventile in Fluidverbindung mit dem Luftkammerelement (110) ausgebildet ist.

11. Bremssystem, insbesondere für Lastkraftwagen, mit wenigstens einer Entlüftungsvorrichtung (100) nach einem der vorgehenden Ansprüche.

## Claims

1. A ventilation device (100), in particular for use with at least one valve unit or a plurality of valve units,
with at least one air chamber element (110), at least one outflow portion (120) and at least one first ventilation channel (130), for forming a fluid connection between an outer side of the ventilation device (100) and the at least one air chamber element (110),
wherein the outflow portion (120) provides the fluid connection between the air chamber element (110) and the at least one first ventilation channel (130),
**characterized in that**
the first ventilation channel (130) has first and second openings (132; 136), wherein a first baffle (134) faces the first opening (132) and a second baffle (138) faces the second opening (136),
wherein the first and second baffles (134; 138) are each spaced apart from the first and second openings (132; 136) in the direction of a first longitudinal axis (X) of the first ventilation channel (130) and each extend across at least one cross-sectional area of the first ventilation channel (130), in particular each across at least one cross-sectional area of the first and second openings (134; 138), so that the fluid connection between the first and second openings (132; 136) to an exterior of the ventilation device (100) is formed along at least one section of each of the first and second baffles (134; 138).

2. The ventilation device (100) according to claim 1,
**characterized in that**
the first ventilation channel (130) opens into a respective second ventilation channel (140) along its first and second openings (132; 136) and the first and second baffles (134; 138).

3. The ventilation device (100) as claimed in claim 2,
**characterized in that**
the second ventilation channels (140) each have third and fourth openings (142; 146),
wherein at least one third baffle surface (144) is formed at a distance from and over at least one cross-sectional area of the second ventilation channels (140), in particular a cross-sectional area of the third opening (142).

4. The ventilation device (100) as claimed in one of the preceding claims,
**characterized in that**
the first and second baffle surfaces (134; 138) are larger than the cross-sectional areas of the first ventilation channel (130), in particular larger than the respective cross-sectional areas of the first and second openings (134; 138).

5. The ventilation device (100) as claimed in one of the preceding claims,
**characterized in that**
the third baffle (144) is larger than the cross-sectional area of the second ventilation channel (140), in particular larger than the cross-sectional area of the third opening (142).

6. The ventilation device (100) as claimed in one of the preceding claims,
**characterized in that**
the baffles (134; 138; 144) are configured and arranged such that the fluid connection between the air chamber element (110) and an outer side of the ventilation device (100) has at least one deflection point along the openings (132; 136; 142).

7. The ventilation device (100) as claimed in one of the preceding claims,
**characterized in that**
the ventilation device (100) is designed in one or more parts, in particular with a first side part (150) and a cover element (160) or with corresponding first and second side parts and a sealing element (170) arranged between the multiple parts (150; 160).

8. The ventilation device (100) as claimed in one of the preceding claims,
**characterized in that**
the at least one outflow portion (120) is formed at a lower end of the air chamber element (110) in the vertical direction.

9. The ventilation device (100) as claimed in one of the preceding claims,
**characterized in that**
the at least one outflow portion (120) is configured as at least one outflow opening (122) or as at least one outflow opening (122) in combination with at least one outflow channel (124), for providing a fluid connection between the air chamber element (110) and the at least one first ventilation channel (130).

10. The ventilation device (100) as claimed in one of the preceding claims,
**characterized in that**
the ventilation device (100) is configured to receive and ventilate a plurality of valves in fluid connection with the air chamber element (110).

11. A brake system, in particular for trucks, comprising at least one ventilation device (100) as claimed in one of the preceding claims.

## Revendications

1. Dispositif de ventilation (100), en particulier destiné à être utilisé avec au moins une unité de soupape ou une pluralité d'unités de soupape,
avec au moins un élément de chambre à air (110), au moins une section d'écoulement (120) et au moins un premier canal de ventilation (130) afin d'conçur une connexion fluidique entre un côté extérieur du dispositif de ventilation (100) et l'au moins un élément de chambre à air (110),
dans lequel la section d'écoulement (120) fournit la connexion fluidique entre l'élément de chambre à air (110) et l'au moins un premier canal de ventilation (130),
**caractérisé en ce que**
le premier canal de ventilation (130) présente de première et deuxième ouvertures (132 ; 136), dans lequel la première ouverture (132) est opposée à une première surface de déflecteur (134) et la deuxième ouverture (136) à une deuxième surface de déflecteur (138),
dans lequel les première et deuxième surfaces de déflecteur (134 ; 138) sont espacées respectivement des première et deuxième ouvertures (132 ; 136) en direction d'un premier axe longitudinal (X) du premier canal de ventilation (130) et s'étendent respectivement sur au moins une surface de section transversale du premier canal de ventilation (130), en particulier respectivement sur au moins une surface de section transversale des première et deuxième ouvertures (134 ; 138), de sorte que la connexion fluidique entre les première et deuxième ouvertures (132 ; 136) vers le côté extérieur du dispositif de ventilation (100) soit conçue respectivement le long d'au moins une section des première et deuxième surfaces de déflecteur (134 ; 138).

2. Dispositif de ventilation (100) selon la revendication 1,
**caractérisé en ce que**
le premier canal de ventilation (130) débouche, le long de ses première et deuxième ouvertures (132 ; 136) et de ses première et deuxième surfaces de déflecteur (134 ; 138) respectivement dans un deuxième canal de ventilation (140).

3. Dispositif de ventilation (100) selon la revendication 2,
**caractérisé en ce que**
les deuxièmes canaux de ventilation (140) présentent respectivement de troisième et quatrième ouvertures (142 ; 146),
dans lequel au moins une troisième surface de déflecteur (144) est conçue à une distance et au-dessus d'au moins une surface de section transversale des deuxièmes canaux de ventilation (140), en particulier une surface de section transversale de la troisième ouverture (142).

4. Dispositif de ventilation (100) selon l'une quelconque des revendications précédentes,
**caractérisé en ce que**
les première et deuxième surfaces de déflecteur (134 ; 138) sont plus grandes que les surfaces de section transversale du premier canal de ventilation (130), en particulier plus grandes que les surfaces de section transversale respectives des première et deuxième ouvertures (134 ; 138).

5. Dispositif de ventilation (100) selon l'une quelconque des revendications précédentes,
**caractérisé en ce que**
la troisième surface de déflecteur (144) est plus grande que la surface de section transversale du deuxième canal de ventilation (140), en particulier plus grande que la surface de section transversale de la troisième ouverture (142).

6. Dispositif de ventilation (100) selon l'une quelconque des revendications précédentes,
**caractérisé en ce que**
les surfaces de déflecteur (134 ; 138 ; 144) sont conçues et disposées de sorte que la connexion fluidique entre l'élément de chambre à air (110) et un côté extérieur du dispositif de ventilation (100) présente au moins un point de déviation le long des ouvertures (132 ; 136 ; 142).

7. Dispositif de ventilation (100) selon l'une quelconque des revendications précédentes,
**caractérisé en ce que**
le dispositif de ventilation (100) est conçu en une seule pièce ou en plusieurs pièces, en particulier avec une première partie latérale (150) et un élément de couvercle (160) ou avec de première et deuxième parties latérales correspondantes ainsi qu'un élément d'étanchéité (170) disposé entre les plusieurs pièces (150 ; 160).

8. Dispositif de ventilation (100) selon l'une quelconque des revendications précédentes,
**caractérisé en ce que**
l'au moins une section d'écoulement (120) est conçue au moins d'une extrémité inférieure de l'élément de chambre à air (110) en direction verticale.

9. Dispositif de ventilation (100) selon l'une quelconque des revendications précédentes,
**caractérisé en ce que**
l'au moins une section d'écoulement (120) est conçue en tant qu'au moins une ouverture d'écoulement (122) ou en tant qu'au moins une ouverture d'écoulement (122) en combinaison avec au moins un canal d'écoulement (124) pour fournir une connexion fluidique entre l'élément de chambre à air (110) et l'au moins un premier canal de ventilation (130).

10. Dispositif de ventilation (100) selon l'une quelconque des revendications précédentes,
**caractérisé en ce que**
le dispositif de ventilation (100) est conçu pour loger et ventiler plusieurs soupapes en connexion fluidique avec l'élément de chambre à air (110).

11. Système de freinage, en particulier pour camions, avec au moins un dispositif de ventilation (100) selon l'une quelconque des revendications précédentes.
